# EUROPÄISCHE PATENTSCHRIFT

(11) **EP 4 022 182 B1**
(45) Veröffentlichungstag und Bekanntmachung des Hinweises auf die Patenterteilung: **02.10.2024**
(21) Anmeldenummer: 19762749.0
(22) Anmeldetag: 29.08.2019
(51) Int. Cl.: F02M 26/26, F02M 26/25, F02M 26/53, F02M 26/64, F02M 26/69, F02M 26/10, F02M 26/14, F02M 26/52

(54) **ABGASRÜCKFÜHRSYSTEM FÜR EINE VERBRENNUNGSKRAFTMASCHINE SOWIE VERFAHREN ZUR REGELUNG EINES DERARTIGEN ABGASRÜCKFÜHRSYSTEMS**
EXHAUST GAS RECIRCULATION SYSTEM FOR AN INTERNAL COMBUSTION ENGINE, AND METHOD FOR REGULATING AN EXHAUST GAS RECIRCULATION SYSTEM OF THIS TYPE
SYSTÈME DE RECIRCULATION DES GAZ D'ÉCHAPPEMENT POUR UN MOTEUR À COMBUSTION INTERNE ET PROCÉDÉ DE RÉGULATION D'UN SYSTÈME DE RECIRCULATION DES GAZ D'ÉCHAPPEMENT DE CE TYPE

(43) Veröffentlichungstag der Anmeldung: 06.07.2022
(73) Patentinhaber: Pierburg GmbH, 41460 Neuss (DE)
(72) Erfinder: VIERKOTTEN, Dirk, 41460 Neuss (DE); PAFFRATH, Holger, 41460 Neuss (DE); SUTTY, Patrick, 41460 Neuss (DE); REIMERS, Thorsten, 41460 Neuss (DE)
(74) Vertreter: terpatent PartGmbB
(86) Internationale Anmeldenummer: PCT/EP2019/073099
(87) Internationale Veröffentlichungsnummer: WO 2021/037367

(56) Entgegenhaltungen:
- EP-A2- 0 994 247
- EP-B1- 0 994 247
- DE-A1- 102016 200 510
- DE-A1- 102017 111 101
- US-A1- 2018 087 449

## Beschreibung

Die vorliegende Erfindung betrifft ein Abgasrückführsystem für eine Verbrennungskraftmaschine mit einem Abgaskanal der Verbrennungskraftmaschine, einem Einlasskanal der Verbrennungskraftmaschine, einem Abgasrückführkanal, der vom Abgaskanal abzweigt und in den Einlasskanal mündet, einem Wärmetauscher, der im Abgasrückführkanal angeordnet ist, und zwei voneinander getrennte Stränge aufweist, einem Abgasrückführventil, welches am Auslass des Wärmetauschers angeordnet ist, einem Klappenventil, welches derart im Abgaskanal angeordnet ist, dass das Klappenventil in einer ersten Stellung den Abgaskanal freigibt, in einer zweiten Stellung den Abgaskanal in Strömungsrichtung stromabwärts der beiden Stränge verschließt, in einer dritten Stellung den Abgaskanal im Bereich zwischen beiden Strängen verschließt und in einer vierten Stellung den Abgaskanal drosselt sowie ein Verfahren zur Regelung eines derartigen Abgasrückfü hrsystems.

Abgasrückführsysteme sind bekannt und dienen zur Reduzierung der Schadstoffanteile in Verbrennungsmotoren. Es wird dabei unterschieden zwischen einer zylinderinternen Abgasrückführung, einer externen Hochdruckabgasrückführung und einer Niederdruckabgasrückführung. Bei der Niederdruckabgasrückführung ist es zur Erzielung ausreichend hoher Abgasrückführraten notwendig, eine Abgasklappe zur Erhöhung des Strömungswiderstandes in der Abgasleitung vorzusehen. Auch ist es bekannt, im Abgasrückführkanal umgehbare Wärmetauscher vorzusehen, durch die die Temperatur des zurückgeführten Abgases herabgesetzt werden kann, wenn dies zur Verringerung der Verbrennungstemperatur im Motor erforderlich ist.

Zusätzlich zu diesen Zwecken der Abgasrückführung wird das heiße Abgas in den letzten Jahren zur Wärmegewinnung im Kraftfahrzeug genutzt. Anstatt das warme Abgas unmittelbar über die Abgasleitung aus dem Fahrzeug abzuleiten, wird dessen thermische Energie genutzt, um beispielsweise die Verbrennungskraftmaschine schneller aufzuheizen, die Fahrerkabine schneller zu erwärmen oder Reibungsverluste durch Erhitzen des Schmiermittelsystems zu reduzieren. Die thermische Energie wird dabei über den Wärmetauscher des Abgasrückführsystems dem Abgas entzogen.

Ein Abgasrückführsystem nach dem Stand der Technik ist beispielsweise aus der WO 2014/136024 A1 bekannt. Es weist einen U-förmigen Wärmetauscher auf, welcher mit einem Abgaskanal und stromabwärts des Wärmetauschers über ein Abgasrückführventil mit einem Einlasskanal, über den Verbrennungsluft zu der Verbrennungskraftmaschine leitbar ist, verbunden ist. In dem Abgaskanal ist ein Klappenventil angeordnet, welches zwischen einer ersten Stellung, bei welcher der Abgaskanal vollständig geöffnet und eine Mündung des Wärmetauschers vollständig verschlossen ist und einer zweiten Stellung, bei welcher der Abgaskanal im Bereich des Wärmetauschers vollständig verschlossen und ein in Strömungsrichtung vorgelagerter Strang des U-förmigen Wärmetauschers vollständig geöffnet ist, so dass der Abgasstrom in diesen Strang des Wärmetauschers geleitet wird, verstellbar ist. Dieses Abgasrückführsystem hat den Nachteil, dass ein ausreichend hohes Strömungsgefälle im Abgasrückführkanal anliegen muss, damit der Wärmetauscher mit einer ausreichenden Abgasmenge durchströmt wird. Dadurch ist dieses Abgasrückführsystem nicht für den Niederdruckbetrieb geeignet, da der Widerstand im Abgasrückführkanal immer höher ist als im Abgaskanal. Entsprechend wird keine ausreichende Regelbarkeit des zurückgeführten Abgasstromes erreicht, insbesondere in Phasen mit hohen Abgasrückführraten. Die gesetzlich vorgeschriebenen Emissionswerte sind entsprechend mit einem derartigen Abgasrückführsystem, insbesondere im Niederdruckbereich, nicht erreichbar.

Daher wurde in der DE 10 2017 111 101 A1 ein Abgasrückführsystem vorgeschlagen, bei dem die im Abgasauslasskanal angeordnete Klappe den Wärmetauscher stromabwärts beider Stränge des Wärmetauschers verschließen kann oder den Abgaskanal zwischen den beiden Strängen verschließt. Entsprechend kann Wärme aus dem Abgas aufgenommen werden und zur Wärmerückgewinnung genutzt werden oder Abgas in ausreichender Menge zurückgeführt werden, indem der Strömungswiderstand in der Abgasauslassleitung erhöht wird.

Des Weiteren ist aus der EP 0 994 247 A2 ein Abgasrückführsystem bekannt, bei dem von einem Abgaskanal eine Abgasrückführleitung abzweigt, die sich im Folgenden in zwei Stränge gabelt. Im ersten Strang hinter der Gabelung ist ein Wärmetauscher angeordnet, der über eine durch den zweiten Strang ausgebildete Bypassleitung umgangen werden kann. Am Ende der Bypassleitung ist ein Hubventil angeordnet, welches über einen gemeinsamen Aktor mit einem Hubventil verbunden ist, welches stromabwärts des Wärmetauschers angeordnet ist. Durch Betätigung des Aktors wird entweder der Bypasskanal oder der Kühlkanal geöffnet. Im Ruhezustand sind beide Stränge geschlossen.

Nachteilig an diesem Abgasrückführsystem ist es jedoch, dass eine Temperaturregelung des zurückgeführten Abgases nicht möglich ist. Entsprechend ist eine Kondensatbildung im Einlasskanal, die zu Beschädigungen eines nachgeordneten Verdichters führen kann, ebenso wenig auszuschließen, wie eine zu lange Warmlaufphase der Verbrennungskraftmaschine.

Die Aufgabe der vorliegenden Erfindung liegt somit darin, ein Abgasrückführsystem für eine Verbrennungskraftmaschine sowie ein Verfahren zur Regelung eines derartigen Abgasrückführsystems zu schaffen, welche für den Niederdruckbetrieb geeignet ist und eine Temperaturregelung des Abgases ermöglicht, ohne dass der Aufbau des Systems zu aufwendig wird. Schäden an einem nachgeschalteten Verdichter sollen ebenso vermieden werden, wie zu lange Warmlaufzeiten oder eine erhöhte Versottung des Wärmetauschers durch anfallendes Kondensat.

Diese Aufgabe wird durch ein Abgasrückführsystem für eine Verbrennungskraftmaschine mit den Merkmalen des Anspruchs 1 sowie durch ein Verfahren zur Regelung eines derartigen Abgasrückführsystems mit den Merkmalen des Anspruchs 11 gelöst.

Das erfindungsgemäße Abgasrückführsystem weist einen Wärmetauscher mit zwei baulich voneinander getrennten Strängen auf, welche entweder U-förmig oder parallel durchströmbar sind. Die beiden Stränge sind derart ausgestaltet, dass eine gegenseitige Beeinflussung der Strömungen in den Strängen vermieden wird. Am zum Einlasskanal weisenden Ende beider Stränge sind diese über einen Sammler miteinander verbunden, so dass in Abhängigkeit von der Klappenstellung des Abgasrückführventils entweder das Abgas aus beiden Strängen über den Sammler in den Abgasrückführkanal geleitet wird, oder das Abgas von dem in Abgasrichtung im Abgaskanal vorgelagerten ersten Strang über den Sammler U-förmig in den zweiten Strang geleitet wird.

Das Abgasrückführsystem weist ein Klappenventil auf, welches derart im Abgaskanal angeordnet ist, dass das Klappenventil in einer ersten Stellung den Abgaskanal freigibt, in einer zweiten Stellung den Abgaskanal in Strömungsrichtung stromabwärts der beiden Stränge verschließt, so dass der Abgasstrom beide Stränge in Richtung vom Abgaskanal zum Einlasskanal durchströmt, in einer dritten Stellung das Klappenventil den Abgaskanal im Bereich zwischen beiden Strängen verschließt, so dass der Abgasstrom durch den in Abgasrichtung vorgelagerten ersten Strang geleitet wird, und der zweite Strang in Abhängigkeit der Stellung des Abgasrückführventils in entgegengesetzter Richtung durchströmt wird, woraufhin das Abgas aus dem zweiten Strang stromabwärts des Klappenventils wieder in den Abgaskanal strömt, und in einer vierten Stellung den Abgaskanal drosselt, also lediglich teilweise verschließt.

In der ersten Stellung hat das Klappenventil somit einen minimalen Strömungswiderstand im Abgaskanal, so dass die Strömung im Abgaskanal durch das Klappenventil kaum gestört wird. In der zweiten Stellung hingegen wird eine vollständige Durchströmung des Abgaskanals vom Klappenventil an stromabwärts der beiden Stränge unterbunden. Das Abgas wird bei geöffnetem AGR-Ventil dadurch in beide Stränge des Wärmetauschers umgeleitet, so dass die gesamte Abgasmenge auf zwei Stränge verteilt wird und dadurch der maximale Wärmetauscherquerschnitt ausgenutzt wird. Dadurch wird der Anteil der zurückgewonnenen thermischen Energie erhöht, da die Temperaturdifferenz zwischen dem Kühlmittel und dem Abgas größer ist als bei einer U-förmigen Durchströmung des Kühlers.

In der dritten Stellung wird eine Durchströmung des Abgaskanals ab der baulichen Trennung zwischen den Strängen unterbunden. Das Abgas wird dadurch durch den in Strömungsrichtung vorgelagerten Strang geleitet. In Abhängigkeit der Klappenstellung des AGR-Ventils wird dadurch bei geöffnetem Abgasrückführventil ein Teil des Abgases zur Verbrennungskraftmaschine zurückgeführt, während der Rest durch den zweiten Strang zum Abgaskanal gelangt. Bei geschlossenem Abgasrückführventil strömt das gesamte Abgas U-förmig durch den Kühler, so dass Energie aus dem Abgasstrom entnommen werden kann.

Erfindungsgemäß ist der Wärmetauscher über eine Bypassleitung umgehbar, deren Durchströmungsquerschnitt mittels eines Bypassventils regelbar ist und welche stromaufwärts des Klappenventils vom Abgaskanal abzweigt. Somit kann auch heißes Abgas direkt zur Verbrennungskraftmaschine gefördert werden. Entsprechend können die Warmlaufzeiten der Verbrennungskraftmaschine verringert werden und die Abgastemperatur an den jeweiligen Betriebszustand angepasst werden. Insbesondere kann die Kondensationsneigung des Wassers im Abgas beim Einströmen in die Ansaugluft verringert werden, indem das Abgas mit höheren Temperaturen zum Einlasskanal gelangt, wodurch höhere Mischtemperaturen erreicht werden. Auch wird die Versottung des Wärmetauschers durch Verringerung der Kondensation reduziert.

Bezüglich des erfindungsgemäßen Verfahrens wird die Aufgabe dadurch gelöst, dass nach dem Kaltstart der Verbrennungskraftmaschine das Klappenventil den Abgaskanal zwischen den beiden Strängen des Wärmetauschers verschließt, das Bypassventil die Bypassleitung verschließt und das Abgasrückführventil den Auslass des Wärmetauschers verschließt, sodass der Wärmetauscher durchströmt wird und entsprechend aufheizen kann, wobei die thermische Energie zur Rückgewinnung, beispielsweise zur Aufheizung des Fahrgastraumes genutzt werden kann.

Anschließend gibt in der Warmlaufphase der Verbrennungskraftmaschine bei Volllast das Klappenventil den Abgaskanal frei, das Bypassventil die Bypassleitung frei und das Abgasrückführventil verschließt den Auslass des Wärmetauschers, wodurch eine schnelle Aufheizung der Verbrennungskraftmaschine zur Verringerung der Schadstoffe erreicht wird.

Bei Teillast in der Warmlaufphase der Verbrennungskraftmaschine verschließt das Klappenventil den Abgaskanal stromabwärts beider Stränge des Wärmetauschers, das Bypassventil gibt die Bypassleitung frei und das Abgasrückführventil verschließt den Auslass des Wärmetauschers, wodurch die zurückgeführte Abgasmenge erhöht wird.

Nach der Warmlaufphase der Verbrennungskraftmaschine gibt bei Volllast das Klappenventil den Abgaskanal frei, das Bypassventil verschließt die Bypassleitung und das Abgasrückführventil gibt den Auslass des Wärmetauschers frei, sodass das Abgas gekühlt zurückgeführt wird, wodurch ebenfalls die Schadstoffemissionen verringert werden.

Bei Teillast wird die zurückgeführte Abgasmenge erhöht, indem nach der Warmlaufphase der Verbrennungskraftmaschine das Klappenventil den Abgaskanal stromabwärts beider Stränge des Wärmetauschers zumindest drosselt, das Bypassventil die Bypassleitung verschließt und das Abgasrückführventil den Auslass des Wärmetauschers freigibt. So kann mit sehr geringem baulichem Aufwand eine vollständige Regelung des zurückgeführten Abgases zur Erreichung optimaler Temperaturen und Mengen hergestellt werden, sodass die Warmlaufphase verkürzt werden kann und eine Kondensation vor dem Verdichter im Einlasskanal verringert werden kann.

Vorzugsweise weist das Bypassventil ein Regelorgan auf, welches mittels eines Aktors bewegbar ist. Somit ist eine genaue Verstellung des Bypassventils zur Regelung der über die Bypassleitung zurückgeführten Abgasmenge möglich.

In einer besonders bevorzugten Ausbildung der Erfindung weisen das Abgasrückführventil und das Bypassventil einen gemeinsamen Aktor auf, sodass auf einen separaten Aktor verzichtet werden kann. Hierfür können unterschiedliche Regelorgane verwendet werden, die eine abhängige oder teilweise abhängige oder eine unabhängige Regelung des Öffnungsquerschnitts der beiden Ventile ermöglicht. Es ist dabei lediglich erforderlich, dass ein Öffnungsquerschnitt des Abgasrückführventils bei geschlossenem Bypassventil und des Bypassventils bei geschlossenem Abgasrückführventil freigegeben werden kann.

In einer hierzu weiterführenden Ausführungsform weisen das Abgasrückführventil und das Bypassventil jeweils ein Regelorgan auf, welches auf einer Ventilstange angeordnet ist, die mittels des Aktors bewegbar ist. Somit kann ein einfacher translatorisch arbeitender Aktor vorgesehen werden, der elektromotorisch mit nachgeschaltetem Getriebe oder elektromagnetisch oder pneumatisch angetrieben wird.

Ein besonders einfacher Aufbau eines derartigen Ventils ergibt sich, wenn die beiden Regelorgane verschieblich und jeweils gegen einen Anschlag vorgespannt auf einer gemeinsamen Ventilstange angeordnet sind und in ihren den jeweiligen Durchströmungsquerschnitt verschließenden Positionen auf einem Ventilsitz aufliegen. Bei einer derartigen Ausführung kann der jeweilige Öffnungsquerschnitt bei geschlossenem zweitem Ventil vollständig geregelt werden. Entsprechend ist jedes der beiden Regelorgane zur Regelung des jeweiligen Durchströmungsquerschnitts bewegbar, während das jeweils andere Regelorgan auf dem Ventilsitz aufliegt.

Vorzugsweise ist das Klappenventil stufenlos zwischen den vier Stellungen und in beide Drehrichtungen verstellbar, so dass schnell zwischen den Stellungen hin- und hergeschaltet werden kann. Durch die beiden Drehrichtungen kann auch jeweils der kürzeste Verstellweg gewählt werden und die Klappe so konstruiert werden, dass das Ventil in zwei Stellungen gegen einen festen Anschlag anliegt.

In einer vorteilhaften Ausgestaltung ist die Drehachse des Klappenventils zwischen einer Verlängerung der baulichen Trennung der Stränge und in Strömungsrichtung des Abgaskanals betrachtet einer Verlängerung einer stromabwärtigen Wand des Wärmetauschers angeordnet. Dies vereinfacht den Aufbau des Klappenventils mit seinem umgebenden Gehäuse und ermöglicht eine vollständige Unterbringung des Klappenventils im Abgaskanal.

In einer besonders einfachen Ausführung des Wärmetauschers sind die beiden Stränge durch eine Trennwand voneinander getrennt. Eine solche Trennwand ist einfach herstellbar und kann als Anschlag für die Klappe dienen.

Vorzugsweise ist ein von der Drehachse entferntes Klappenende in der zweiten und dritten Stellung entweder unmittelbar gegenüberliegend zur stromabwärtigen Wand des Wärmetauschers oder Trennwand angeordnet oder liegt gegen die stromabwärtige Wand des Wärmetauschers oder die Trennwand an, wodurch jeweils ein dichter Verschluss des Abgaskanals in den beiden Stellungen hergestellt werden kann.

In einer Weiterführung des erfindungsgemäßen Verfahrens drosselt in der aufgeheizten Phase der Verbrennungskraftmaschine bei kalten Umgebungstemperaturen das Klappenventil den Abgaskanal, während das Bypassventil die Bypassleitung verschließt und das Abgasrückführventil den Auslass des Wärmetauschers verschließt, so dass Abgas zunächst durch den ersten Strang und anschließend in umgekehrter Richtung durch den zweiten Strang des Wärmetauschers strömt. Auf diese Weise wird eine Wärmerückgewinnung weiter ermöglicht und eine erhöhte Kondensatbildung mit folgender Versottung durch ein Abkühlen des Wärmetauschers zuverlässig verhindert.

Des Weiteren ist es vorteilhaft, wenn bei Ausfall des Aktors des Bypassventils und des Abgasrückführventils das Bypassventil die Bypassleitung verschließt und das Abgasrückführventil den Auslass des Wärmetauschers verschließt, da auf diese Weise ein Betrieb der Verbrennungskraftmaschine weiterhin möglich ist. Bei Ausfall des Aktors des Klappenventils gibt entsprechend das Klappenventil den Abgaskanal frei, so dass die Verbrennungskraftmaschine weiter betrieben werden kann.

Vorzugsweise verschließt das Klappenventil zur Abgaswärmerückgewinnung den Abgaskanal zwischen den Strängen, während die zurückgeführte Abgasmenge durch die Stellung des Bypassventils und des Abgasrückführventils geregelt wird. So wird auch in Betriebszuständen, in denen eine Abgasrückführung von kaltem oder heißem Abgas gewünscht ist, eine Wärmerückgewinnung über den Wärmetauscher ermöglicht und ein Auskühlen des Wärmetauschers mit anschließender, erhöhter Kondensatbildung verhindert.

Es wird somit ein Abgasrückführsystem sowie ein Verfahren zur Regelung dieses Abgasrückführsystems für eine Verbrennungskraftmaschine geschaffen, welche eine Temperatur- und Mengenregelung des Abgases im Abgaskanal und im Abgasrückführkanal ermöglicht, wodurch Wärme zurückgewonnen werden kann, Kondensation im Wärmetauscher und im Einlasskanal vor einem nachfolgenden Verdichter verhindert werden kann. Dennoch bleibt der Bauteileaufwand vergleichbar gering.

Weitere Einzelheiten und Vorteile der vorliegenden Erfindung ergeben sich aus der nachfolgenden Beschreibung der Ausführungsbeispiele in Verbindung mit den Zeichnungen.

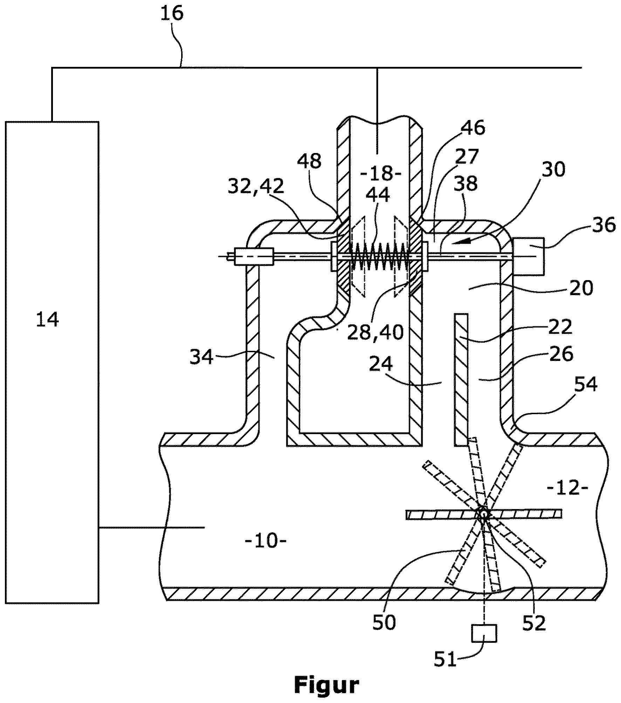

Die Figur zeigt eine schematische Darstellung eines erfindungsgemäßen Abgasrückführsystems in einer ersten Betriebsstellung.

Das dargestellte Abgasrückführsystem umfasst einen Abgaskanal 10, welcher zu einem Auslass 12 führt und in den Abgas aus einer Verbrennungskraftmaschine 14 eingeleitet wird. Des Weiteren weist das Abgasrückführsystem einen Einlasskanal 16 auf, über welchen Luft aus der Umgebung angesaugt wird und der üblicherweise über einen Verdichter mit der Verbrennungskraftmaschine 14 verbunden ist.

Der Abgaskanal 10 ist mit dem Einlasskanal 16 über einen Abgasrückführkanal 18 verbunden, über den Abgas aus dem Abgaskanal 10 zurück zum Einlasskanal 16 geführt werden kann. In dem Abgasrückführkanal 18 ist ein Wärmetauscher 20 angeordnet, der zwei voneinander durch eine Trennwand 22 getrennte Stränge 24, 26 aufweist. Die Trennwand 22 endet vor dem zum Einlasskanal 16 weisenden Ende des Wärmetauschers 20, so dass Abgas entweder U-förmig vom ersten Strang 24 in den zweiten Strang 26 strömen kann oder aus beiden Strängen 24, 26 das Abgas zu einem stromabwärts an einem Auslass 27 des Wärmetauschers 20 angeordneten Abgasrückführventil 28 strömt.

Dieses Abgasrückführventil 28 ist als Ventileinheit 30 mit einem Bypassventil 32 ausgebildet, über welches ein Durchströmungsquerschnitt einer Bypassleitung 34 regelbar ist, die stromaufwärts des Wärmetauschers 20 vom Abgaskanal 10 abzweigt und unter Umgehung des Wärmetauschers 20 stromabwärts des Wärmetauschers 20 in den Abgasrückführkanal 18 mündet. Die Ventileinheit weist einen Aktor 36 auf, der eine Ventilstange 38 betätigt, auf der die beiden Regelorgane 40, 42 des Abgasrückführventils 28 beziehungsweise des Bypassventils 32 verschieblich angeordnet sind. Die beiden Regelorgane 40, 42 sind über ein zwischen den Regelorganen 40, 42 angeordnetes Federelement 44 jeweils in Richtung eines nicht dargestellten Absatzes auf der Ventilstange 38 verspannt. Beide Regelorgane 40, 42 sind auf einen Ventilsitz 46, 48 aufsetzbar, so dass bei Betätigung des Aktors 36 in die erste Richtung der Durchströmungsquerschnitt des Abgasrückführkanals 18 am Auslass 27 des Wärmetauschers 20 über das Abgasrückführventil 28 regelbar ist, während die Bypassleitung 34 durch das Bypassventil 32 verschlossen ist und bei Betätigung des Aktors 36 in die entgegengesetzte Richtung der Abgasrückführkanal 18 durch das Regelorgan 40 des Abgasrückführventils 28 verschlossen ist, während der Durchströmungsquerschnitt der Bypassleitung 34 durch das Regelorgan 42 des Bypassventils 32 geregelt wird.

Im Abgaskanal 10 ist ein als Schmetterlingsventil ausgebildetes Klappenventil 50 angeordnet, welches in beide Drehrichtungen verstellbar ist und dessen Welle 52 in Richtung der Erstreckung des Abgaskanals 10 betrachtet zwischen der Trennwand 22 und einer stromabwärtigen Wand 54 des Wärmetauschers 20 angeordnet ist. Dieses Klappenventil 50 ist mittels eines Aktors 51 über die Welle 52 kontinuierlich verstellbar und kann insbesondere in eine erste Stellung gedreht werden, in der es sich entlang der Mittelachse des Abgaskanals 10 erstreckt und somit diesen weitestgehend freigibt, in eine zweite Stellung gedreht werden, in der es den Abgaskanal 10 in Strömungsrichtung stromabwärts der beiden Stränge 24, 26 verschließt und entsprechend gegen die stromabwärtige Wand 54 des Wärmetauschers 20 anliegt und in eine dritte Stellung gedreht werden, in der der Abgaskanal 10 im Bereich zwischen beiden Strängen 24, 26 verschlossen wird, das Klappenventil 50 also unmittelbar gegenüberliegend zur Trennwand 22 des Wärmtauschers 20 angeordnet ist und mit der gegenüberliegenden Seite gegen die Wand des Abgaskanals 10 anliegt. Des Weiteren sind beliebige Zwischenstellungen anfahrbar.

Mit diesem Abgassystem können nun für verschiedene Betriebszustände optimale Temperaturen und Mengen eingestellt werden und eine Wärmerückgewinnung aus dem Abgas optimiert werden.

So kann unmittelbar nach dem Kaltstart das Klappenventil 50 in die dritte Stellung gedreht werden, in der das Klappenventil 50 den Abgaskanal 10 zwischen den beiden Strängen 24, 26 verschließt, während das Abgasrückführventil 28 und das Bypassventil 32 sich in der geschlossenen Position befinden, sodass das Abgas aus dem Abgaskanal 10 zunächst in den ersten Strang 24 des Wärmetauschers 20 strömt und am Ende der Trennwand 22 um 180° umgeleitet wird und den zweiten Strang 26 in entgegengesetzter Richtung durchströmt, um hinter dem Klappenventil 50 wieder in den Abgaskanal 10 zu strömen. Auf diese Weise wird ein schnelles Aufheizen des Kühlmittels des Wärmetauschers 20 erreicht, so dass die Energie des Abgases zur Wärmerückgewinnung genutzt werden kann.

In der Warmlaufphase kann durch Öffnen des Bypassventils 32 und Schließen des Abgasrückführventils 28 Abgas mit einer hohen Temperatur zur Verbrennung zurückgeführt werden, wodurch eine schnelle Aufheizung der Verbrennungskraftmaschine 14 ermöglicht wird. Ist dabei eine hohe Abgasrückführrate gewünscht kann das Klappenventil 50 in eine den Abgaskanal 10 stromabwärts des Wärmetauschers 20 verschließende oder zumindest drosselnde Stellung gedreht werden, so dass der Gegendruck im Abgaskanal 10 erhöht wird und somit die zurückgeführte Abgasmenge erhöht wird.

Nach der Warmlaufphase kann ein Thermomanagement mit Wärmerückgewinnung erfolgen, indem der Wärmetauscher 20 bei kalten Umgebungstemperaturen durchströmt wird, indem das Klappenventil 50 auf eine den Abgaskanal 10 teilweise drosselnde Stellung gedreht wird, so dass zunächst der erste Strang 24 und anschließend der zweite Strang 26 des Wärmetauschers 20 durchströmt wird. Dabei kann sowohl die Wärme des Abgases durch das Kühlmittel aufgenommen und genutzt werden als auch ein Auskühlen des Wärmetauschers 20 mit daraus folgender Kondensatbildung im Wärmetauscher 20 verhindert werden. Bei normalen Umgebungstemperaturen kann das Klappenventil 50 in eine den Abgaskanal 10 zwischen den beiden Strängen 24, 26 verschließende Stellung gedreht werden und das Abgasrückführventil 28 geregelt werden, um einerseits Wärme zurückzugewinnen als auch Abgas gekühlt zur Verbrennungskraftmaschine 14 zurückzuführen. Durch Öffnen des Bypassventils 32 und Schließen des Abgasrückführventils 28 kann auch heißes Abgas zurückgeführt werden und gleichzeitig Wärme zurückgewonnen werden.

Zusätzlich kann in dieser Phase auch Abgas gekühlt zur Verbrennungskraftmaschine 14 zurückgeführt werden, indem das Klappenventil 50 geöffnet wird und das Abgasrückführventil 28 geöffnet wird, so dass das Abgas im Wärmetauscher 20 parallel durch den ersten Strang 24 und den zweiten Strang 26 strömt. Zur Erhöhung der zurückgeführten Abgasmenge kann das Klappenventil 50 auch angestellt werden, so dass der Abgaskanal 10 stromabwärts des Wärmetauschers 20 gedrosselt beziehungsweise geschlossen wird. In diesem Fall wird eine erhöhte Abgasmenge parallel durch die beiden Stränge 24, 26 zurück zur Verbrennungskraftmaschine 14 geführt. Die an das Kühlmittel abgeführte Wärme kann weiterhin genutzt werden.

Zusätzlich wird bei einem derartigen kombinierten Abgasrückführventil 28 und Bypassventil 32, bei dem zwischen den beiden Regelorganen 40, 42 das Federelement 44 angeordnet ist, über die die beiden Regelorgane 40, 42 gegen ihre Ventilsitze 46, 48 gedrückt werden, bei Ausfall des Aktors 36 eine Sicherheitsstellung angefahren, in der eine Abgasrückführung unterbrochen wird. Das Klappenventil 50 wird in diesem Betriebszustand geöffnet und weist ebenfalls eine fail-safe Stellung auf, so dass das Klappenventil 50 bei Ausfall des Aktors 51 in seine den Abgaskanal 10 öffnende Stellung gedreht wird.

Das beschriebene erfindungsgemäße Abgasrückführsystem ist für den Niederdruckbereich geeignet, wobei hohe zurückgeführte Abgasmengen zur Verfügung gestellt werden können und gleichzeitig ein hoher Wirkungsgrad in Bezug auf die zurückgewonnene thermische Energie erreicht wird. Darüber hinaus ist eine Regelbarkeit der zurückgewonnenen thermischen Energie, der Abgastemperatur und der Abgasmenge mit einer minimalen Anzahl verwendeter Bauteile möglich. Anfallende Kondensate, die zu einer Versottung des Wärmetauschers oder zu Schäden an einem nachfolgenden Verdichter führen, werden minimiert.

Es sollte deutlich sein, dass der Schutzbereich nicht auf das beschriebene Ausführungsbeispiel eines Abgasrückführsystems beschränkt ist, sondern verschiedene Modifikationen und konstruktive Änderungen denkbar sind. Beispielsweise sind andere Ausgestaltungen des Klappenventils möglich. Auch müssen die Stränge nicht durch eine einzige Trennwand voneinander getrennt sein, sondern können durch unabhängig voneinander angeordnete Stränge ausgebildet sein. Des Weiteren sind unterschiedliche Ausführungen des kombinierten Abgasrückführ- und Bypassventils denkbar. Dabei ist beispielsweise auch eine Anordnung der Regelorgane auf zwei Ventilstangen denkbar, die nebeneinander angeordnet sind und über einen gemeinsamen Aktor betätigt werden.

## Patentansprüche

1. Abgasrückführsystem für eine Verbrennungskraftmaschine mit
- einem Abgaskanal (10) der Verbrennungskraftmaschine (14),
- einem Einlasskanal (16) der Verbrennungskraftmaschine (14),
- einem Abgasrückführkanal (18), der vom Abgaskanal (10) abzweigt und in den Einlasskanal (16) mündet,
- einem Wärmetauscher (20), der im Abgasrückführkanal (18) angeordnet ist, und zwei voneinander getrennte Stränge (24, 26) aufweist,
- einem Abgasrückführventil (28), welches an einem Auslass (27) des Wärmetauschers (20) angeordnet ist,
- einem Klappenventil (50), welches derart im Abgaskanal (10) angeordnet ist, dass das Klappenventil (50) in einer ersten Stellung den Abgaskanal (10) freigibt, in einer zweiten Stellung den Abgaskanal (10) in Strömungsrichtung stromabwärts der beiden Stränge (24, 26) verschließt, in einer dritten Stellung den Abgaskanal (10) im Bereich zwischen beiden Strängen (24, 26) verschließt und in einer vierten Stellung den Abgaskanal (10) drosselt,
**dadurch gekennzeichnet, dass**
der Wärmetauscher (20) über eine Bypassleitung (34) umgehbar ist, deren Durchströmungsquerschnitt mittels eines Bypassventils (32) regelbar ist und welche stromaufwärts des Klappenventils (50) vom Abgaskanal (10) abzweigt.

2. Abgasrückführsystem für eine Verbrennungskraftmaschine nach Anspruch 1,
**dadurch gekennzeichnet, dass**
das Bypassventil (32) ein Regelorgan (42) aufweist, welches mittels eines Aktors (36) bewegbar ist.

3. Abgasrückführsystem für eine Verbrennungskraftmaschine nach Anspruch 2,
**dadurch gekennzeichnet, dass**
das Abgasrückführventil (28) und das Bypassventil (32) einen gemeinsamen Aktor (36) aufweisen.

4. Abgasrückführsystem nach Anspruch 3,
**dadurch gekennzeichnet, dass**
das Abgasrückführventil (28) und das Bypassventil (32) jeweils ein Regelorgan (40, 42) aufweisen, welches auf einer Ventilstange (38) angeordnet ist, die mittels des Aktors (36) bewegbar ist.

5. Abgasrückführsystem für eine Verbrennungskraftmaschine nach Anspruch 4,
**dadurch gekennzeichnet, dass**
die beiden Regelorgane (40, 42) verschieblich und jeweils gegen einen Anschlag vorgespannt auf einer gemeinsamen Ventilstange (38) angeordnet sind und in ihren den jeweiligen Durchströmungsquerschnitt verschließenden Positionen auf einem Ventilsitz (46, 48) aufliegen.

6. Abgasrückführsystem für eine Verbrennungskraftmaschine nach Anspruch 4 oder 5,
**dadurch gekennzeichnet, dass**
jedes der beiden Regelorgane (40, 42) zur Regelung des jeweiligen Durchströmungsquerschnitts bewegbar ist, während das jeweils andere Regelorgan (40, 42) auf dem Ventilsitz (46, 48) aufliegt.

7. Abgasrückführsystem für eine Verbrennungskraftmaschine nach einem der vorherigen Ansprüche,
**dadurch gekennzeichnet, dass**
das Klappenventil (50) mittels eines Aktors (51) stufenlos zwischen den vier Stellungen und in beide Drehrichtungen verstellbar ist.

8. Abgasrückführsystem für eine Verbrennungskraftmaschine nach einem der vorherigen Ansprüche,
**dadurch gekennzeichnet, dass**
die Drehachse des Klappenventils (50) zwischen einer Verlängerung der baulichen Trennung der Stränge (24, 26) und in Strömungsrichtung des Abgaskanals (10) betrachtet einer Verlängerung einer stromabwärtigen Wand (54) des Wärmetauschers (20) angeordnet ist.

9. Abgasrückführsystem für eine Verbrennungskraftmaschine nach einem der vorherigen Ansprüche,
**dadurch gekennzeichnet, dass**
die beiden Stränge (24, 26) des Wärmetauschers (20) durch eine Trennwand (22) voneinander getrennt sind.

10. Abgasrückführsystem für eine Verbrennungskraftmaschine nach einem der vorherigen Ansprüche,
**dadurch gekennzeichnet, dass**
ein von der Drehachse entferntes Ende des Klappenventils (50) in der zweiten und dritten Stellung entweder unmittelbar gegenüberliegend zur stromabwärtigen Wand (54) des Wärmetauschers (20) oder zur Trennwand (22) angeordnet ist oder gegen die stromabwärtige Wand (54) des Wärmetauschers (20) oder gegen die Trennwand (22) anliegt.

11. Verfahren zur Regelung eines Abgasrückführsystems nach einem der vorherigen Ansprüche, wobei
nach dem Kaltstart der Verbrennungskraftmaschine (14) das Klappenventil (50) den Abgaskanal (10) zwischen den beiden Strängen (24, 26) des Wärmetauschers (20) verschließt, das Bypassventil (32) die Bypassleitung (34) verschließt und das Abgasrückführventil (28) den Auslass (27) des Wärmetauschers (20) verschließt,
in der Warmlaufphase der Verbrennungskraftmaschine (14) bei Volllast das Klappenventil (50) den Abgaskanal (10) freigibt, das Bypassventil (32) die Bypassleitung (34) freigibt und das Abgasrückführventil (28) den Auslass (27) des Wärmetauschers (20) verschließt,
in der Warmlaufphase der Verbrennungskraftmaschine (14) bei Teillast das Klappenventil (50) den Abgaskanal (10) stromabwärts beider Stränge (24, 26) des Wärmetauschers (20) verschließt, das Bypassventil (32) die Bypassleitung (34) freigibt und das Abgasrückführventil (28) den Auslass (27) des Wärmetauschers (20) verschließt,
nach der Warmlaufphase der Verbrennungskraftmaschine (14) bei Volllast das Klappenventil (50) den Abgaskanal (10) freigibt, das Bypassventil (32) die Bypassleitung (34) verschließt und das Abgasrückführventil (28) den Auslass (27) des Wärmetauschers (20) freigibt,
nach der Warmlaufphase der Verbrennungskraftmaschine (14) bei Teillast das Klappenventil (50) den Abgaskanal (10) stromabwärts beider Stränge (24, 26) des Wärmetauschers (20) zumindest drosselt, das Bypassventil (32) die Bypassleitung (34) verschließt und das Abgasrückführventil (28) den Auslass (27) des Wärmetauschers (20) freigibt.

12. Verfahren zur Regelung eines Abgasrückführsystems nach Anspruch 11,
**dadurch gekennzeichnet, dass**
in der aufgeheizten Phase der Verbrennungskraftmaschine (14) bei kalten Umgebungstemperaturen das Klappenventil (50) den Abgaskanal (10) drosselt, das Bypassventil (32) die Bypassleitung (34) verschließt und das Abgasrückführventil (28) den Auslass (27) des Wärmetauschers (20) verschließt, so dass Abgas teilweise zunächst durch den ersten Strang (24) des Wärmetauschers (20) und anschließend durch den zweiten Stang (26) des Wärmetauschers (20) geführt wird.

13. Verfahren zur Regelung eines Abgasrückführsystems nach Anspruch 11 oder 12,
**dadurch gekennzeichnet, dass**
bei Ausfall des Aktors (36) des Bypassventils (32) und des Abgasrückführventils (28), das Bypassventil (32) die Bypassleitung (34) verschließt und das Abgasrückführventil (28) den Auslass (27) des Wärmetauschers (20) verschließt.

14. Verfahren zur Regelung eines Abgasrückführsystems nach einem der Ansprüche 11 bis 13,
**dadurch gekennzeichnet, dass**
bei Ausfall eines Aktors (51) des Klappenventils (50) das Klappenventil (50) den Abgaskanal (10) freigibt.

15. Verfahren zur Regelung eines Abgasrückführsystems nach einem der Ansprüche 11 bis 13,
**dadurch gekennzeichnet, dass**
zur Abgaswärmerückgewinnung das Klappenventil (50) den Abgaskanal (10) zwischen den Strängen (24, 26) verschließt und die zurückgeführte Abgasmenge durch die Stellung des Bypassventils (32) und des Abgasrückführventils (28) geregelt wird.

## Claims

1. Exhaust gas recirculation system for an internal combustion engine with
- an exhaust gas channel (10) of the internal combustion engine (14),
- an inlet channel (16) of the internal combustion engine (14),
- an exhaust gas recirculation channel (18) which branches off from the exhaust gas channel (10) and leads into the inlet channel (16),
- a heat exchanger (20) which is arranged in the exhaust gas recirculation channel (18) and comprises two separate paths (24, 26),
- an exhaust gas recirculation valve (28) which is arranged at an outlet (27) of the heat exchanger (20),
- a flap valve (50) which is arranged in the exhaust gas channel (10) in such a way that the flap valve (50) opens the exhaust gas channel (10) in a first position, closes the exhaust gas channel (10) in a second position in the flow direction downstream of the two paths (24, 26), in a third position closes the exhaust gas channel (10) in the region between the two paths (24, 26) and in a fourth position throttles the exhaust gas channel (10),
**characterised in that**
the heat exchanger (20) can be bypassed via a bypass conduit (34), the flow cross-section of which can be controlled by means of a bypass valve (32) and which branches off from the exhaust gas channel (10) upstream of the flap valve (50).

2. Exhaust gas recirculation system for an internal combustion engine according to claim 1,
**characterised in that**
the bypass valve (32) comprises a control element (42) which can be moved by means of an actuator (36).

3. Exhaust gas recirculation system for an internal combustion engine according to claim 2,
**characterised in that**
the exhaust gas recirculation valve (28) and the bypass valve (32) comprise a common actuator (36).

4. Exhaust gas recirculation system according to claim 3,
**characterised in that**
the exhaust gas recirculation valve (28) and the bypass valve (32) respectively comprise a control element (40, 42) which is arranged at a valve rod (38) that is movable by means of the actuator (36).

5. Exhaust gas recirculation system for an internal combustion engine according to claim 4,
**characterised in that**
the two control elements (40, 42) are arranged at a common valve rod (38) in a displaceable manner and respectively pretensioned against a stop and in their positions closing the respective flow cross-section they rest on a valve seat (46, 48).

6. Exhaust gas recirculation system for an internal combustion engine according to claim 4 or 5,
**characterised in that**
each of the two control elements (40, 42) can be moved to control the respective flow cross-section, while the other control element (40, 42) is resting on the valve seat (46, 48).

7. Exhaust gas recirculation system for an internal combustion engine according to one of the previous claims,
**characterised in that**
the flap valve (50) can be adjusted steplessly between the four positions and in both directions of rotation by means of an actuator (51).

8. Exhaust gas recirculation system for an internal combustion engine according to one of the previous claims,
**characterised in that**
the axis of rotation of the flap valve (50) is arranged between an extension of the structural separation of the paths (24, 26) and, viewed in the direction of flow of the exhaust gas channel (10), an extension of a downstream wall (54) of the heat exchanger (20).

9. Exhaust gas recirculation system for an internal combustion engine according to one of the previous claims,
**characterised in that**
the two paths (24, 26) of the heat exchanger (20) are separated from one another by a separating wall (22).

10. Exhaust gas recirculation system for an internal combustion engine according to one of the previous claims,
**characterised in that**
an end of the flap valve (50) remote from the axis of rotation is arranged in the second and third position either directly opposite the downstream wall (54) of the heat exchanger (20) or the separating wall (22) or bears against the downstream wall (54) of the heat exchanger (20) or the separating wall (22).

11. Method for controlling an exhaust gas recirculation system according to one of the previous claims, wherein
after the cold start of the internal combustion engine (14), the flap valve (50) closes the exhaust gas channel (10) between the two paths (24, 26) of the heat exchanger (20) ), the bypass valve (32) closes the bypass conduit (34) and the exhaust gas recirculation valve (28) closes the outlet (27) of the heat exchanger (20),
in the warm-up phase of the internal combustion engine (14) at full load, the flap valve (50) opens the exhaust gas channel (10), the bypass valve (32) opens the bypass conduit (34) and the exhaust gas recirculation valve (28) closes the outlet (27) of the heat exchanger (20),
in the warm-up phase of the internal combustion engine (14) at partial load, the flap valve (50) closes the exhaust gas channel (10) downstream of both paths (24, 26) of the heat exchanger (20), the bypass valve (32) opens the bypass conduit (34) and the exhaust gas recirculation valve (28) closes the outlet (27) of the heat exchanger (20),
after the warm-up phase of the internal combustion engine (14) at full load, the flap valve (50) opens the exhaust gas channel (10), the bypass valve (32) closes the bypass conduit (34) and the exhaust gas recirculation valve (28) opens the outlet (27) of the heat exchanger (20),
after the warm-up phase of the internal combustion engine (14) at partial load, the flap valve (50) at least throttles the exhaust gas channel (10) downstream of both paths (24, 26) of the heat exchanger ( 20) at least throttles the exhaust gas channel (10) downstream of both strands (24, 26) of the heat exchanger (20), the bypass valve (32) closes the bypass conduit (34) and the exhaust gas recirculation valve (28) opens the outlet (27) of the heat exchanger (20).

12. Method for controlling an exhaust gas recirculation system according to claim 11,
**characterised in that**
in the heated phase of the internal combustion engine (14) at cold ambient temperatures, the flap valve (50) throttles the exhaust gas channel (10), the bypass valve (32) closes the bypass conduit (34) and the exhaust gas recirculation valve ( 28) closes the outlet (27) of the heat exchanger (20), so that exhaust gas is initially partially guided through the first path (24) of the heat exchanger (20) and then through the second path (26) of the heat exchanger (20).

13. Method for controlling an exhaust gas recirculation system according to claim 11 or 12,
**characterised in that**
in the event of failure of the actuator (36) of the bypass valve (32) and of the exhaust gas recirculation valve (28), the bypass valve (32) closes the bypass conduit (34) and the exhaust gas recirculation valve (28) closes the outlet (27) of the heat exchanger (20).

14. Method for controlling an exhaust gas recirculation system according to one of Claims 11 to 13,
**characterised in that**
in the event of failure of an actuator (51) of the flap valve (50), the flap valve (50) opens the exhaust gas channel (10).

15. Method for controlling an exhaust gas recirculation system according to one of Claims 11 to 13,
**characterised in that**
for exhaust gas heat recovery, the flap valve (50) closes the exhaust gas channel (10) between the paths (24, 26) and the amount of exhaust gas recirculated is controlled by the position of the bypass valve (32) and the exhaust gas recirculation valve (28).

## Revendications

1. Système de recirculation de gaz d'échappement pour un moteur à combustion interne avec
- un canal d'échappement (10) du moteur à combustion interne (14),
- un conduit d'admission (16) du moteur à combustion interne (14),
- un canal de recirculation des gaz d'échappement (18), qui se sépare du canal d'échappement (10) et débouche dans le canal d'admission (16),
- un échangeur de chaleur (20), qui est disposé dans le canal de recirculation de gaz d'échappement (18) et qui comprend deux branches (24, 26) séparées l'une de l'autre,
- une vanne de recirculation de gaz d'échappement (28) disposée à une sortie (27) de l'échangeur de chaleur (20),
- une vanne à clapet (50) qui est disposée dans le canal d'échappement (10) de telle sorte que la vanne à clapet (50), dans une première position, ouvre le canal d'échappement (10), dans une deuxième position, ferme le canal d'échappement (10) dans le sens d'écoulement en aval des deux branches (24, 26), dans une troisième position, ferme le canal d'échappement (10) dans la zone entre les deux branches (24, 26) et dans une quatrième position, réduit le canal d'échappement (10),
**caractérisé en ce que**
l'échangeur de chaleur (20) peut être contourné par une conduite de dérivation (34) dont la section de passage peut être réglée au moyen d'une vanne de dérivation (32) et qui dérive du canal d'échappement (10) en amont de la vanne à clapet (50).

2. Système de recirculation de gaz d'échappement pour un moteur à combustion interne selon la revendication 1,
**caractérisé en ce que**
la vanne de dérivation (32) comprend un organe de régulation (42) qui peut être déplacé au moyen d'un actionneur (36).

3. Système de recirculation de gaz d'échappement pour un moteur à combustion interne selon la revendication 2,
**caractérisé en ce que**
la vanne de recirculation de gaz d'échappement (28) et la vanne de dérivation (32) comprennent un actionneur commun (36).

4. Système de recirculation de gaz d'échappement selon la revendication 3,
**caractérisé en ce que**
la vanne de recirculation de gaz d'échappement (28) et la vanne de dérivation (32) comprennent chacune un organe de régulation (40, 42) qui est disposé sur une tige de vanne (38) qui est déplaçable au moyen de l'actionneur (36).

5. Système de recirculation de gaz d'échappement pour un moteur à combustion interne selon la revendication 4,
**caractérisé en ce que**
les deux organes de régulation (40, 42) sont disposés de manière coulissante et chacun précontraint contre une butée sur une tige de vanne commune (38) et reposent sur un siège de vanne (46, 48) dans leurs positions fermant la section de passage respective.

6. Système de recirculation de gaz d'échappement pour un moteur à combustion interne selon la revendication 4 ou 5,
**caractérisé en ce que**
chacun des deux organes de régulation (40, 42) est déplaçable pour réguler la section de passage respective, tandis que l'autre organe de régulation respectif (40, 42) repose sur le siège de vanne (46, 48).

7. Système de recirculation de gaz d'échappement pour un moteur à combustion interne selon l'une des revendications précédentes,
**caractérisé en ce que**
la vanne à clapet (50) est réglable en continu entre les quatre positions et dans les deux sens de rotation au moyen d'un actionneur (51).

8. Système de recirculation de gaz d'échappement pour un moteur à combustion interne selon l'une des revendications précédentes,
**caractérisé en ce que**
l'axe de rotation de la vanne à clapet (50) est disposé entre un prolongement de la séparation structurelle des branches (24, 26) et, vu dans le sens d'écoulement du canal d'échappement (10), un prolongement d'une paroi aval (54) de l'échangeur de chaleur (20).

9. Système de recirculation de gaz d'échappement pour un moteur à combustion interne selon l'une des revendications précédentes,
**caractérisé en ce que**
les deux branches (24, 26) de l'échangeur de chaleur (20) sont séparées l'une de l'autre par une paroi de séparation (22).

10. Système de recirculation de gaz d'échappement pour un moteur à combustion interne selon l'une quelconque des revendications précédentes,
**caractérisé en ce que**
une extrémité de la vanne à clapet (50) éloignée de l'axe de rotation est disposée, dans les deuxième et troisième positions, soit directement en regard de la paroi aval (54) de l'échangeur de chaleur (20) ou de la paroi de séparation (22), soit en appui contre la paroi aval (54) de l'échangeur de chaleur (20) ou contre la paroi de séparation (22).

11. Méthode de régulation d'un système de recirculation de gaz d'échappement selon l'une des revendications précédentes, dans laquelle
après le démarrage à froid du moteur à combustion interne (14), la vanne à clapet (50) ferme le canal d'échappement (10) entre les deux branches (24, 26) de l'échangeur de chaleur (20), la vanne de dérivation (32) ferme la conduite de dérivation (34) et la vanne de recirculation des gaz d'échappement (28) ferme la sortie (27) de l'échangeur de chaleur (20),
pendant la phase de réchauffement du moteur à combustion interne (14) à pleine charge, la vanne à clapet (50) ouvre le canal d'échappement (10), la vanne de dérivation (32) ouvre la conduite de dérivation (34) et la vanne de recirculation des gaz d'échappement (28) ferme la sortie (27) de l'échangeur de chaleur (20),
pendant la phase de réchauffage du moteur à combustion interne (14) à charge partielle, la vanne à clapet (50) ferme le canal d'échappement (10) en aval des deux branches (24, 26) de l'échangeur de chaleur (20), la vanne de dérivation (32) ouvre la conduite de dérivation (34) et la vanne de recirculation de gaz d'échappement (28) ferme la sortie (27) de l'échangeur de chaleur (20),
après la phase de réchauffage du moteur à combustion interne (14) à pleine charge, la vanne à clapet (50) ouvre le canal d'échappement (10), la vanne de dérivation (32) ferme la conduite de dérivation (34) et la vanne de recirculation des gaz d'échappement (28) ouvre la sortie (27) de l'échangeur de chaleur (20),
après la phase de chauffage du moteur à combustion interne (14) à charge partielle, la vanne à clapet (50) réduit au moins le canal d'échappement (10) en aval des deux branches (24, 26) de l'échangeur de chaleur (20), la vanne de dérivation (32) ferme la conduite de dérivation (34) et la vanne de recirculation des gaz d'échappement (28) ouvre la sortie (27) de l'échangeur de chaleur (20).

12. Méthode de régulation d'un système de recirculation des gaz d'échappement selon la revendication 11,
**caractérisé en ce que**
en phase de chauffage du moteur à combustion interne (14), à des températures ambiantes froides, la vanne à clapet (50) réduit le débit du canal d'échappement (10), la vanne de dérivation (32) ferme le conduit de dérivation (34) et la vanne de recirculation des gaz d'échappement (28) ferme la sortie (27) de l'échangeur de chaleur (20), de sorte que le gaz d'échappement passe partiellement d'abord par la première branche (24) de l'échangeur de chaleur (20), puis par la deuxième branche (26) de l'échangeur de chaleur (20).

13. Méthode de régulation d'un système de recirculation des gaz d'échappement selon la revendication 11 ou 12,
**caractérisé en ce que**
en cas de dysfonctionnement de l'actionneur (36) de la vanne de dérivation (32) et de la vanne de recirculation de gaz d'échappement (28), la vanne de dérivation (32) ferme le conduit de dérivation (34) et la vanne de recirculation de gaz d'échappement (28) ferme la sortie (27) de l'échangeur de chaleur (20).

14. Méthode de régulation d'un système de recirculation de gaz d'échappement selon l'une quelconque des revendications 11 à 13,
**caractérisé en ce que**
en cas de dysfonctionnement d'un actionneur (51) de la vanne à clapet (50), la vanne à clapet (50) ouvre le canal d'échappement (10).

15. Méthode de régulation d'un système de recirculation des gaz d'échappement selon l'une quelconque des revendications 11 à 13,
**caractérisé en ce que**
pour la récupération de chaleur des gaz d'échappement, la vanne à clapet (50) ferme le canal d'échappement (10) entre les branches (24, 26) et la quantité de gaz d'échappement recyclés est régulée par la position de la vanne de dérivation (32) et de la vanne de recirculation des gaz d'échappement (28).
